Europäisches Patentamt

European Patent Office

Office européen des brevets

(19)

(11) EP 0 973 337 A2

(12) **EUROPEAN PATENT APPLICATION**

(43) Date of publication:
19.01.2000 Bulletin 2000/03

(51) Int Cl.⁷: **H04N 7/26**, H04N 7/30

(21) Application number: 99401756.4

(22) Date of filing: 13.07.1999

(84) Designated Contracting States:
**AT BE CH CY DE DK ES FI FR GB GR IE IT LI LU
MC NL PT SE**
Designated Extension States:
**AL LT LV MK RO SI**

(30) Priority: **14.07.1998 US 92739 P**

(71) Applicant: **THOMSON CONSUMER
ELECTRONICS, INC.
Indianapolis, IN 46290-1024 (US)**

(72) Inventors:
• **Comer, Mary Lafuze
92100 Boulogne (FR)**

• **Carlsgaard, Eric Stephen
92100 Boulogne (FR)**
• **Horlander, Thomas Edward
92100 Boulogne (FR)**
• **Barron, Steven Anthony
92100 Boulogne (FR)**

(74) Representative:
**Ruellan-Lemonnier, Brigitte et al
THOMSON multimedia,
46 quai A. Le Gallo
92648 Boulogne Cédex (FR)**

(54) **System for deriving a decoded reduced-resolution video signal from a coded high-definition video signal**

(57)    A system for decoding compressed image data in the form of pixel blocks representing an image of a first resolution to provide an image of a reduced second resolution decompresses a pixel block of the first resolution image. The system involves selecting (204) a sub-set of frequency domain coefficients in the compressed pixel block data, and processing elements (204,205,206,208) of the sub-set of coefficients to provide pixel data representing pixels comprising a spatially distributed sub-set of pixels in the pixel block in the first resolution image and excludes other pixels of the pixel block. The pixel data representing pixels comprising the spatially distributed pixels is formatted (210) to provide the reduced second resolution image.

FIGURE 2

EP 0 973 337 A2

## Description

The present invention relates to the decoding of a coded high-definition (HD) video signal to derive a decoded video signal suitable, for example, for recording or producing a picture-in-picture (PIP) or other reduced resolution display.

Known in the art are television receivers that, while displaying a relatively large picture derived from a primary television channel, also simultaneously display a small PIP derived from a secondary television channel. In the case of a high-definition television (HDTV) receiver, the receiver must include a relatively complex and expensive decoder that conforms with the ISO 13818-2 standard for decoding a received coded HD video signal in real time for high definition display. However. because the PIP is small, there is no need to provide a high definition PIP display because a viewer inherently would not be able to resolve the higher definition components of a high definition PIP. Therefore, to provide the PIP, the HDTV receiver may be supplied with a lower-resolution second simpler and less expensive decoder which still conforms with the ISO 13818-2 standard.

One approach, known in the art, to providing a lower-resolution second decoder which is somewhat simpler and less expensive than the decoder providing the high definition display, is disclosed in the three U.S. patents 5,614,952, 5,614957 and 5,635,985, which, respectively, issued to Boyce et al. on March 25,1997, March 25,1997 and June 3, 1997.

However, there still remains a need for a lower-resolution second decoder suitable for deriving a PIP in real time from a received coded HD video signal which is significantly simpler and less expensive to implement than is the second decoder disclosed by Boyce et al, but still conforms with the ISO 13818-2 standard.

A system for decoding compressed image data in the form of pixel blocks representing an image of a first resolution to provide an image of a reduced second resolution decompresses a pixel block of the first resolution image. The system involves selecting a sub-set of frequency domain coefficients in the compressed pixel block data, and processing elements of the sub-set of coefficients to provide pixel data representing pixels comprising a spatially distributed sub-set of pixels in the pixel block in the first resolution image and excludes other pixels of the pixel block. The pixel data representing pixels comprising the spatially distributed pixels is formatted to provide the reduced second resolution image.

BRIEF DESCRIPTION OF THE DRAWING

FIGURE 1 is a functional block diagram. according to the invention, showing a variable-length decoder (VLD) responsive to an input HD MPEG data bit-stream for applying a first selected MPEG data output therefrom to a PIP decoding means and a second selected MPEG data output therefrom to an HD decoding means.

FIGURE 2 is a simplified functional block diagram of an embodiment of the PIP decoding means of FIGURE 1 which incorporates features of the present invention.

FIGURES 3, 3a, 3b and 3c relate to embodiments of the sample-rate converter shown in FIGURE 2.

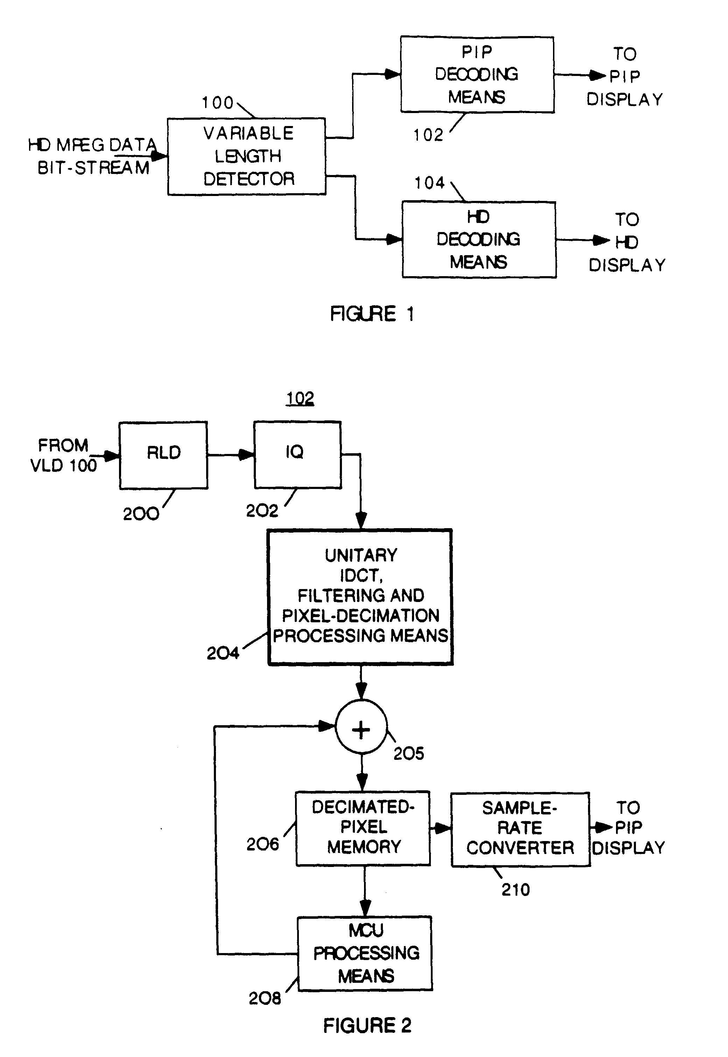

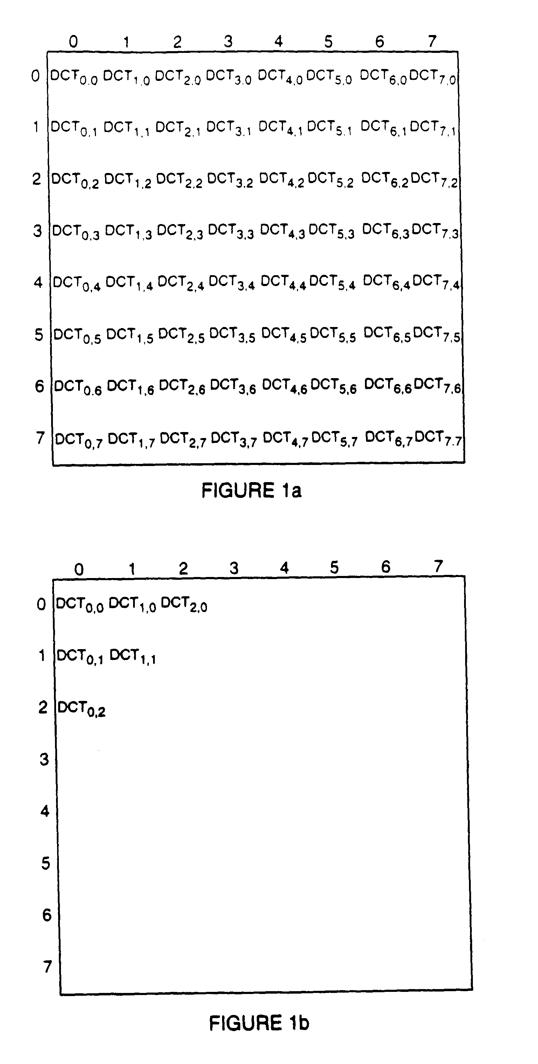

Referring to FIGURE 1, there is shown VLD 100, PIP decoding means 102 and HD decoding means 104. One of the responses of VLD 100 to the coded HD MPEG data defined by the ongoing bit-stream applied as an input thereto is to convey coded picture information defined by each of successive 8x8 blocks of quantized discrete cosine transform (DCT) coefficients as an input to HD decoding means 104. Further, among the functions performed by HD decoding means 104 is to first perform inverse quantization of each successive 8x8 block of DCT coefficients and then perform inverse discrete cosine transformation (IDCT) of the DCT coefficients of each successive 8x8 block. Finally, HD decoding means 104 must perform motion compensation for each inter-coded macroblock after IDCT has been performed on that inter-coded macroblock.

FIGURE la shows an 8x8 block of DCT coefficients, wherein (1) the value of coefficient $DCT_{0,0}$ (located in the upper left corner of the 8x8 block) represents the average (DC) value (i.e., both the horizontal and vertical frequencies are 0) of the picture defined by the 64 values of a corresponding 8x8 block of pixels prior to having undergone DCT, while (2) the value of coefficient $DCT_{7,7}$ (located in the lower right comer of the 8x8 block) represents the highest horizontal frequency and highest vertical frequency components of the picture defined by the 64 values of a corresponding 8x8 block of pixels prior to having undergone DCT. For the case of an HD picture, all, or nearly all, of the 64 DCT coefficients from $DCT_{0,0}$ to $DCT_{7,7}$ inclusive of FIGURE la have non-zero values. This results in a relatively huge amount of image-processing computation to accomplish IDCT in real time. Further, motion compensation also requires a large amount of image-processing computation to accomplish in real time. Therefore, HD decoding means 104 (Figure 1) requires about 96 Mbits memory to temporarily store MPEG decoded image frames prior to display. HD decoding means 104 requires these frames for motion compensation to reconstruct accurate images for display. Thus, a physical implementation of HD decoding means 104 is relatively expensive.

Returning to FIGURE 1, another of the responses of VLD 100 to the coded HD MPEG data defined by the ongoing bit-stream applied as an input thereto is to convey only coded picture information defined by a relatively small given number of lower-frequency-defining, quantized DCT coefficients of each successive 8x8 block as an input to PIP decoding means 102. In a preferred tutorial example of PIP decoding means 102, described in detail below, this small given number of DCT coefficients consists of the 6 DCT coefficients $DCT_{0,0}$, $DCT_{1,0}$, $DCT_{2,0}$, $DCT_{0,1}$, $DCT_{1,1}$ and $DCT_{0,2}$ shown in FIGURE 1b. More specifically, the PIP bit-stream received by VLD 100 is pre-parsed by a parser within VLD 100, so that the maximum run value for the DCT coefficients in the PIP bit-stream applied as an input to PIP decoding means 102 is 7. The significance of this constraint will become apparent from the detailed description of the preferred example set forth below.

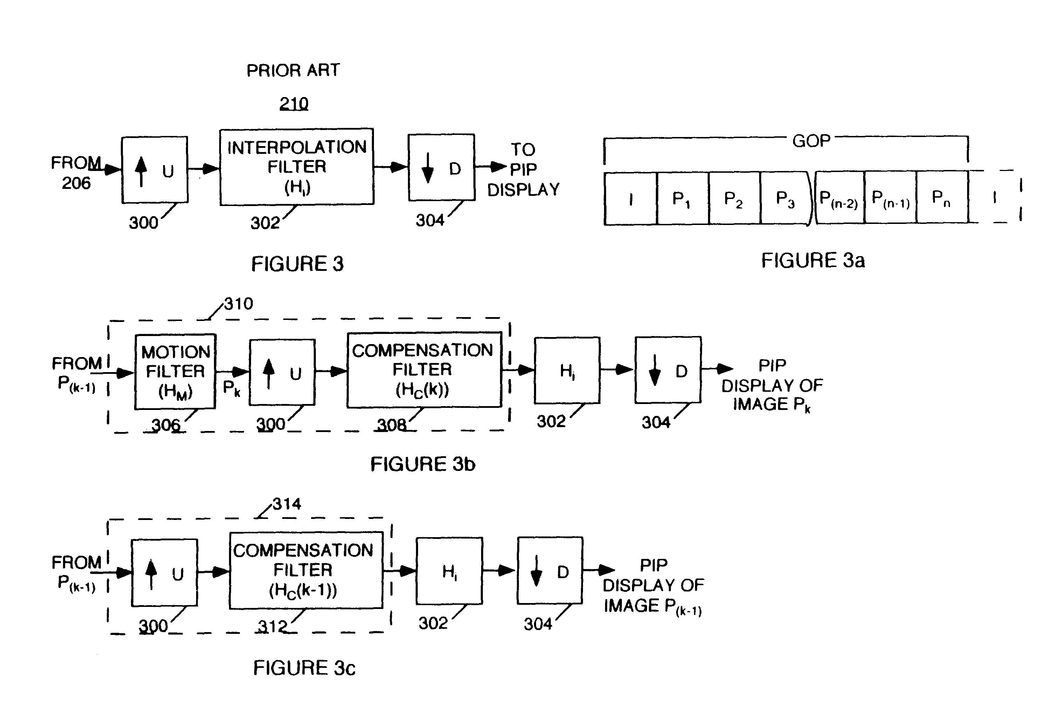

The simplified functional block diagram of the embodiment of PIP decoding means 102 shown in FIGURE 2 comprises runlength decoder (RLD) 200, inverse quantizer (IQ) 202, unitary IDCT unit 204 (including filtering and pixel-decimation processing means), adder 205, decimated pixel memory 206, motion compensation unit processing means 208 and sample-rate converter 210. Although the simplified functional block diagram of FIGURE 2 does not show means for controlling the operation of this embodiment of PIP decoding means 102, it should be understood that suitable control means that conform with the requirements of the ISO 13818-2 standard would be included in a physical implementation of this embodiment.

For illustrative purposes, the following description of the aforesaid elements 200, 202, 204, 205, 206, 208 and 210 assumes that each of these elements is being operated in accordance with the above-discussed preferred tutorial example.

In this example, RLD 200 outputs 6 DCT coefficients for each 8x8 coded block using the 2 scan patterns defined in the ISO 13818-2 standard. The positioning of the 6 DCT coefficients within each 8x8 block is illustrated in Figure 1b. If the alternate_scan flag from the picture coding extension for the current picture is 0, the 6 DCT coefficients shown in Figure 1b correspond to coefficients 0,1,2,3,4,5 in 1-dimensional scan order, whereas if alternate_scan is 1, the 6 DCT coefficients of interest are coefficients 0,1,2,4,5,6 in scan order. There are two run values that have a meaning in RLD 200 which is different from that described in the ISO 13818-2 standard, depending on the value of the alternate_scan. If alternate_scan is 0, a run value of 6 indicates that the coefficients needed by PIP decoder 102 are all 0 and there is no subsequent non-zero coefficient. Similarly. if alternate_scan is 1, a run value of 7 indicates that the coefficients needed by decoder 102 are all 0 and there is no subsequent non-zero coefficient. Table 1. below. summarizes the meaning of RLD 200 run values of 6 and 7 for the two possible values of the alternate_scan flag.

Table 1-

| Interpretation of run = 6 and run = 7 by RLD 200 | | |
|---|---|---|
| Run | Alternate_Scan | Interpretation in PIP RLD |
| 6 | 0 | All DCT coefficients = 0 |
| 6 | 1 | Same as ISO 13818-2 standard |
| 7 | 0 | Not allowed |
| 7 | 1 | All DCT coefficients = 0 |

IQ 202 performs inverse quantization arithmetic and saturation on the 6 DCT coefficients as described in the ISO 13818-2 standard. More specifically, IQ 202 must perform the inverse quantization arithmetic and saturation portions of the inverse quantization process described in the ISO 13818-2 standard, for DCT coefficients $(u,v) = (0,0)$, (1,0), (2,0), (0,1), (1,1), and (0,2). The mismatch control portion of the inverse quantization process is not needed.

Conventionally, an extensive computational process requiring three separate steps is needed to convert the coded information in an 8x8 block, defined in the frequency domain by the respective values of inversely-quantized DCT coefficients at the output from IQ 202, into picture information, defined in the spatial domain by the respective values of a smaller block of decimated pixels, for use in deriving a reduced-resolution video signal for the PIP display. The first step is to determine the value of each of the 64 (i.e., full pixel density) pixel values of each 8x8 block of picture information as an IDCT function of the inversely-quantized DCT coefficient values. Thereafter, the second step of lowpass filtering followed by the third step of pixel decimation may be performed on the pixels each successive 8x8 block to provide the desired smaller block of decimated pixels. For instance, a decimation of alternate horizontal and vertical filtered pixels for the case of a progressive scan would result in a 75% reduction in pixel density. Similarly, a decimation of 3 out of 4 successive filtered pixels solely in the horizontal direction for the case of an interlaced scan would also result in a 75% reduction in pixel density. Thus, in either case, such a decimation would result in a reduction in pixel density from 64 per 8x8 block to only 16 per 8x8 block. However, the amount of hardware required to implement this conventional three-step computational process is relatively large and, therefore, relatively expensive.

In accordance with the principles of the present invention. unitary IDCT, filtering and pixel-decimation processing means 204 is able to convert the coded respective values of inversely-quantized DCT coefficients contained in an 8x8 block at the output from IQ 202, into a smaller block of decimated pixels in a single-step computational process. Thus. the amount of hardware required to implement this single-step computational process by means 204 is relatively small and, therefore, relatively inexpensive compared to the aforesaid conventional three-step computational process. More specifically, in the case of the preferred tutorial example, where the inversely-quantized DCT coefficients comprise the 6 DCT coefficients $DCT_{0,0}$, $DCT_{1,0}$, $DCT_{2,0}$, $DCT_{0,1}$, $DCT_{1,1}$ and $DCT_{0,2}$ shown in FIGURE 1b, this single-step computational process directly derives (1) each of the first-following progressive-scan set of 16 decimated pixel values (or, alternatively, prediction error values) g(0,0) to g(3,3) as a function of the respective values of these 6 DCT coefficients and (2) each of the second-following interlaced-scan set of 16 decimated pixel values (or, alternatively, prediction error values) g(0,0) to g(1,7) as a function of the respective values of these 6 DCT coefficients. It should be noted that the value of DCT coefficient $DCT_{0,2}$ in the second set is equal to zero and, therefore, does not contribute to any one of the computed values of decimated pixel $g_{0,0}$ to $g_{1,7}$.

PROGRESSIVE-SCAN SET OF DECIMATED PIXEL VALUES

$g(0,0) = [8DCT_{0,0} + 10DCT_{1,0} + 10DCT_{0,1} + 7DCT_{0,2} + 13DCT_{1,1} + 7DCT_{2,0}] / 64$
$g(1,0) = [8DCT_{0,0} + 4DCT_{1,0} + 10DCT_{0,1} + 7DCT_{0,2} + 5DCT_{1,1} - 7DCT_{2,0}] / 64$
$g(2,0) = [8DCT_{0,0} - 4DCT_{1,0} + 10DCT_{0,1} + 7DCT_{0,2} - 5DCT_{1,1} - 7DCT_{2,0}] / 64$
$g(3,0) = [8DCT_{0,0} - 10DCT_{1,0} + 10DCT_{0,1} + 7DCT_{0,2} - 13DCT_{1,1} + 7DCT_{2,0}] / 64$
$g(0,1) = [8DCT_{0,0} + 10DCT_{1,0} + 4DCT_{0,1} - 7DCT_{0,2} + 5DCT_{1,1} + 7DCT_{2,0}] / 64$
$g(1,1) = [8DCT_{0,0} + 4DCT_{1,0} + 4DCT_{0,1} - 7DCT_{0,2} + 2DCT_{1,1} - 7DCT_{2,0}] / 64$
$g(2,1) = [8DCT_{0,0} - 4DCT_{1,0} + 4DCT_{0,1} - 7DCT_{0,2} - 2DCT_{1,1} - 7DCT_{2,0}] / 64$
$g(3,1) = [8DCT_{0,0} - 10DCT_{1,0} + 4DCT_{0,1} - 7DCT_{0,2} - 5DCT_{1,1} + 7DCT_{2,0}] / 64$
$g(0,2) = [8DCT_{0,0} + 10DCT_{1,0} - 4DCT_{0,1} - 7DCT_{0,2} - 5DCT_{1,1} + 7DCT_{2,0}] / 64$
$g(1,2) = [8DCT_{0,0} + 4DCT_{1,0} - 4DCT_{0,1} - 7DCT_{0,2} - 2DCT_{1,1} - 7DCT_{2,0}] / 64$
$g(2,2) = [8DCT_{0,0} - 4DCT_{1,0} - 4DCT_{0,1} - 7DCT_{0,2} + 2DCT_{1,1} - 7DCT_{2,0}] / 64$
$g(3,2) = [8DCT_{0,0} - 10DCT_{1,0} - 4DCT_{0,1} - 7DCT_{0,2} + 5DCT_{1,1} + 7DCT_{2,0}] / 64$
$g(0,3) = [8DCT_{0,0} + 10DCT_{1,0} - 10DCT_{0,1} t 7DCT_{0,2} - 13DCT_{1,1} + 7DCT_{2,0}] / 64$
$g(1,3) = [8DCT_{0,0} + 4DCT_{1,0} - 10DCT_{0,1} + 7DCT_{0,2} - 5DCT1,1 - 7DCT_{2,0}] / 64$
$g(2,3) = [8DCT_{0,0} - 4DCT_{1,0} - 10DCT_{0,1} + 7DCT_{0,2} + 5DCT1,1 - 7DCT_{2,0}] / 64$
$g(3,3) = [8DCT_{0,0} - 10DCT_{1,0} - 10DCT_{0,1} + 7DCT_{0,2} + 13DCT1,1 + 7DCT_{2,0}] / 64$

INTERLACED-SCAN SET OF DECIMATED PIXEL VALUES

$g(0,0) = [8DCT_{0,0} + 7DCT_{1,0} + 11DCT_{0,1} + 10DCT_{0,2} + 10DCT_{1,1}] / 64$
$g(1,0) = [8DCT_{0,0} - 7DCT_{1,0} + 11DCT_{0,1} + 10DCT_{0,2} - 10DCT_{1,1}] / 64$
$g(0,1) = [8DCT_{0,0} + 7DCT_{1,0} + 9DCT_{0,1} + 4DCT_{0,2} + 9DCT_{1,1}] / 64$
$g(1,1) = [8DCT_{0,0} - 7DCT_{1,0} + 9DCT_{0,1} + 4DCT_{0,2} - 9DCT_{1,1}] / 64$
$g(0,2) = [8DCT_{0,0} + 7DCT_{1,0} + 6DCT_{0,1} - 4DCT_{0,2} + 6DCT_{1,1}] / 64$
$g(1,2) = [8DCT_{0,0} - 7DCT_{1,0} + 6DCT_{0,1} - 4DCT_{0,2} - 6DCT_{1,1}] / 64$
$g(0,3) = [8DCT_{0,0} + 7DCT_{1,0} + 2DCT_{0,1} - 10DCT_{0,2} + 2DCT_{1,1}] / 64$
$g(1,3) = [8DCT_{0,0} - 7DCT_{1,0} + 2DCT_{0,1} - 10DCT_{0,2} - 2DCT_{1,1}] / 64$
$g(0,4) = [8DCT_{0,0} + 7DCT_{1,0} - 2DCT_{0,1} - 10DCT_{0,2} - 2DCT_{1,1}] / 64$
$g(1,4) = [8DCT_{0,0} - 7DCT_{1,0} - 2DCT_{0,1} - 10DCT_{0,2} + 2DCT_{1,1}] / 64$
$g(0,5) = [8DCT_{0,0} + 7DCT_{1,0} - 6DCT_{0,1} - 4DCT_{0,2} - 6DCT_{1,1}] / 64$
$g(1,5) = [8DCT_{0,0} - 7DCT_{1,0} - 6DCT_{0,1} - 4DCT_{0,2} + 6DCT_{1,1}] / 64$
$g(0,6) = [8DCT_{0,0} + 7DCT_{1,0} - 9DCT_{0,1} - 4DCT_{0,2} - 9DCT_{1,1}] / 64$
$g(1,6) = [8DCT_{0,0} - 7DCT_{1,0} - 9DCT_{0,1} + 4DCT_{0,2} + 9DCT_{1,1}] / 64$
$g(0,7) = [8DCT_{0,0} + 7DCT_{1,0} - 11DCT_{0,1} + 10DCT_{0,2} - 10DCT_{1,1}] / 64$
$g(1,7) = [8DCT_{0,0} - 7DCT_{1,0} - 11DCT_{0,1} + 10DCT_{0,2} + 10DCT_{1,1}] / 64$

Each of the above "Progressive-Scan Set of Decimated Pixel Values" and above "Interlaced-Scan Set of Decimated Pixel Values" was derived in the following manner:

1. If $DCT_{u,v}$ denotes the DCT coefficient with horizontal frequency index $u$ and vertical frequency index $v$, then the IDCT equation which would be used to decode a block denoted f(x,y) at full resolution (where x = 0,......, N; y = 0,......,N) is given by

$$f(\mathbf{x},\mathbf{y}) \;=\; \frac{2}{N}\sum_{u=0}^{N-1}\sum_{v=0}^{N-1}C(u)C(v)DCT_{u,v}\cos\frac{(2\mathbf{x}+1)u\pi}{2N}\cos\frac{(2\mathbf{y}+1)v\pi}{2N} \tag{1}$$

(per ISO 13818-2 standard )

2. Using only the 6 DCT coefficients shown in FIGURE 1b, gives the approximation equation 2

$$f(\mathbf{x},\mathbf{y}) \;\approx\; \frac{2}{N}\left[\begin{array}{l}\dfrac{1}{2}DCT_{0,0}+\dfrac{1}{\sqrt{2}}DCT_{1,0}\cos\dfrac{(2\mathbf{x}+1)\pi}{2N}+\dfrac{1}{\sqrt{2}}DCT_{2,0}\cos\dfrac{(2\mathbf{x}+1)2\pi}{2N}+\\[2mm]\dfrac{1}{\sqrt{2}}DCT_{0,1}\cos\dfrac{(2\mathbf{y}+1)\pi}{2N}+\dfrac{1}{\sqrt{2}}DCT_{1,1}\cos\dfrac{(2\mathbf{x}+1)\pi}{2N}\cos\dfrac{(2\mathbf{y}+1)\pi}{2N}+\\[2mm]\dfrac{1}{\sqrt{2}}DCT_{0,2}\cos\dfrac{(2\mathbf{y}+1)2\pi}{2N}\end{array}\right] \tag{2}$$

3. Let the right-hand side of approximation equation 2 be denoted $\tilde{f}(x,y)$. In the case of a progressive scan (i.e., the progressive_sequence flag is 1), the average value of the values of a set of 4 contiguous pixels (or prediction errors) arranged in a 2x2 block portion of the 8x8 block could be computed by

$$\tilde{g}(x,y) = \frac{1}{4}\left[\tilde{f}(2x,2y) + \tilde{f}(2x+1,2y) + \tilde{f}(2x,2y+1) + \tilde{f}(2x+1,2y+1)\right] \tag{3}$$

In the case of an interlaced scan (i.e.. the progressive_sequence flag is 0), the average value of the values of a set of 4 contiguous pixels (or prediction errors) arranged in a 4x1 block portion of the 8x8 block could be computed by

$$\tilde{g}(x,y) = \frac{1}{4}\left[\tilde{f}(4x,y) + \tilde{f}(4x+1,y) + \tilde{f}(4x+2,y) + \tilde{f}(4x+3,y)\right] \tag{4}$$

Thus, the 16 decimated pixels form a 4x4 block or a 2x8 block (depending on the progressive_sequence flag) of either pixel values or prediction errors. This block is denoted $\tilde{g}(x,y)$, x = 0,...,K; y= 0,...,L. If the progressive_sequence flag is 0, then K=1 and L=7. If the progressive_sequence flag is 1, then K=3 and L=3.

4. The 16 equations g(0,0) to g(3,3) of the above "Progressive-Scan Set of Decimated Pixel Values" were derived by substituting equation 2 into equation (3), substituting numeric values for x and y in g(x,y), substituting N = 8, and approximating the weighting factors for the DCT coefficients of the 16 equations of the "Progressive-Scan Set of Decimated Pixel Values" with rational values. Similarly, the 16 equations g(0,0) to g(1,7) of the above "Interlaced-Scan Set of Decimated Pixel Values" were derived by substituting equation 2 into equation (4), substituting numeric values for x and y in $\tilde{g}(x,y)$, substituting N = 8, and approximating the weighting factors for the DCT coefficients of the 16 equations of the "Interlaced-Scan Set of Decimated Pixel Values" with rational values.

As a result, a different spatially distributed sub-set of pixels is advantageously selected for interlace image output than for progressive image output. Vertical decimation filtering can be done vertically on either a frame basis or on a field-basis. Subjectively, it may be observed that when a lot of motion occurs in a frame, field-based filtering may be better and conversely, when there's a lot of spatial detail, frame-based filtering may be better. Consequently, in order to minimize the problems associated with the pixel decimation process, the preferred embodiment uses exemplary decoding at 1/4 horizontal resolution and full vertical resolution for interlaced sequences. In contrast, the preferred embodiment uses decoding at 1/2 horizontal and 1/2 vertical resolution for progressive sequences. However, these decimation factors are exemplary only and not exclusive, other factors may also be used for this purpose.

Returning to FIGURE 2, decimated pixel memory 206 (which, because of pixel decimation, requires a storage capacity size of only 1/4 the capacity size of a corresponding undecimated pixel memory) comprises a plurality of separate buffers, each of which buffers, under the control of unshown control means, is capable of temporarily storing decimated pixels first written therein and then readout therefrom. In conformity with the ISO 13818-2 standard, decimated pixel memory 206 includes one or more buffers for storing decimated pixels that define reconstructed intracoded (I), predictive-coded (P) and/or bi-directionally predictive-coded (B) frame or field reference pictures. Further, motion-compensated prediction block output of pixel values from MCU processing means 208 (described in more detail below) is added in adder 205 to each corresponding block output of 16 decimated pixel values derived in unitary IDCT, filtering and pixel-decimation processing means 204 from each successive 8x8 block, and the summed pixel values of the output from adder 205, which are applied as an input to decimated pixel memory 206, are written into a first buffer thereof. This first buffer may be a first-in first-out (FIFO) buffer in which the stored decimated pixels may be reordered between (1) being written into the first buffer and (2) being read out from the first buffer and written into another buffer of decimated pixel memory 206. In the case of a current I or P (prediction) frame or field, decimated pixel memory 206 includes a buffer thereof which applies a macroblock first readout output, which conforms with the ISO 13818-2 standard, as an input to MCU processing means 208 in order to provide motion compensation.

In accordance with the above-discussed preferred tutorial example, MCU processing means 208 operates to form a block of luma predictions and 2 blocks of chroma predictions for every macroblock. If the macroblock is part of an intracoded (I) reference picture, the prediction values are all 0. Otherwise, pixels from decimated non-intracoded (predictive P and B) reference picture(s) stored in decimated pixel memory 206 are read and lowpass filtered in MCU processing means 208 to obtain the predictions in the following manner:

There are 3 elements of the motion compensation process performed by MCU processing means 208. First, there is the location of the current block of decimated pixels, which must be fetched from a buffer storing a reference picture. Second, there is the size of the current block of decimated pixels which must be fetched, and third, there is the filtering which is to be performed on this current block of decimated pixels. In the definition of these elements. the symbol / represents integer division with truncation of the result toward minus infinity. and the symbol // represents integer division with truncation of the result toward 0. The location of a block of pixels to be fetched for motion compensation is specified by the horizontal and vertical coordinates of the start (i.e., the upper-left corner) of the block in the reference picture.

The first step in determining the location of a block of pixels to be fetched from memory is obtaining the motion vector which would be used if the sequence were being decoded at full resolution. This step includes the decoding of motion vector data in the bit-stream, the updating of motion vector predictors. and the selection of motion vectors in non-intracoded macroblocks which contain no coded motion vectors (e.g. skipped macroblocks). MCU processing means 208 performs all of these operations as described in the ISO 13818-2 standard.

After a motion vector has been decoded, it is modified to point to the correct location in the decimated reference picture. Let x and y be the horizontal and vertical positions of the block of predictions being computed and let mv = (dx,dy) be the decoded motion vector, so that if the sequence were being decoded at full resolution a block of pixels at location (x + dx/2, y + dy/2) in the full-resolution reference luma picture would be read from memory and used to form luma predictions. Similarly, a block of chroma values at location (x/2 + (dx//2)/2, y/2 + (dy//2)/2) in the reference chroma picture is needed to form predictions for each of the 2 chroma components in a full-resolution decode.

The location of a block to be read from decimated pixel memory 206 for motion compensation by MCU processing means 208 is determined using x, y, dx, dy, where x and y are again the full-resolution coordinates of the block currently being predicted and (dx,dy) is the decoded motion vector. Table 2 below shows the locations of blocks for various prediction modes. The sizes of the blocks to be read from decimated pixel memory 206 for motion compensation in the MCU processing means 208 are specified for various prediction modes in Table 3 below.

Table 2-

| Locations of Blocks read from Memory 206 for Motion Compensation in MCU processing means 208 | | |
|---|---|---|
| Prediction Mode | Horizontal coordinate | Vertical coordinate |
| Progressive sequence, luma | x/2 + dx/4 | y/2 + dy/4 |
| Progressive sequence, chroma | x/4 + (dx//2)/4 | y/4 + (dy//2)/4 |
| Interlaced sequence, luma | x/4 + dx/8 | y + dy/2 |
| Interlaced sequence, chroma | x/8 + (dx//2)/8 | y/2 + (dy//2)/2 |

Table 3-

| Sizes of Blocks read from Memory 206 for Motion Compensation in MCU processing means 208 | | |
|---|---|---|
| Prediction Mode | Horizontal Size | Vertical Size |
| Progressive sequence, luma | 9 | 9 |
| Progressive sequence, chroma | 5 | 5 |
| Interlaced sequence, luma, frame prediction | 5 | 17 |
| Interlaced sequence, luma, field prediction | 5 | 9 |
| Interlaced sequence, chroma, frame prediction | 3 | 9 |
| Interlaced sequence, chroma, field prediction | 3 | 5 |

After a block of pixels needed for motion compensation has been read from decimated pixel memory 206, it must be filtered to obtain the predictions. There are 5 different filters which are used for prediction filtering. The 5 filters are listed in Table 4 below. Filter 1 has 2 phases, and is the same as the filter described in the ISO 13818-2 standard, where phase 0 of filter 1 is used if the motion vector is even and phase 1 of filter 1 is used if the motion vector is odd. Filter 2 has 4 phases and is used only for both horizontal and vertical luma predictions in progressive sequences. Filter 3 has 8 phases and is used only for horizontal luma predictions in interlaced sequences. Filter 4 has 4 phases and is used only for both horizontal and vertical chroma predictions in progressive sequences. Filter 5 has 8 phases and is used only for horizontal chroma predictions in interlaced sequences. The selection of the phase to be used in each of filters 2, 3, 4 and 5 is based on the motion vector. Tables 5 through 12 below show the filter and phase to be used for different prediction modes. The symbol % represents the modulus operator, and dx and dy are the horizontal and vertical components of the decoded motion vector. The results from the filter operation must be rounded to the nearest integer, not truncated.

In bi-directionally predicted macroblocks 2 blocks of decimated pixels are read from decimated pixel memory 206 and filtered separately before being combined as described in the ISO 13818-2 standard. The output from the prediction filtering (after the combination of the 2 blocks if the macroblock is bi-directionally predicted) is the final output from MCU processing means 208. The sizes of the final prediction blocks for various prediction modes are listed in Table 13 below. These final prediction blocks are added to the output from unitary IDCT, filtering and pixel-decimation processing means 204 in adder 205. The sum of the predictions and the output from unitary IDCT. filtering and pixel-decimation processing means 204 is saturated so that all pixel values written to decimated pixel memory 206 lie between 0 and 255.

Table 4-

| Filters Used for Prediction Filtering | |
|---|---|
| Prediction Filters | Filter Kernel Function |
| Filter 1 | (1,2,1)/2 |
| Filter 2 | (-2,-1,1,7,18,26,30,26,18,7,1,-1,-2)/32 |
| Filter 3 | (-1,-1,-2,-4,-5,-5,-2,2,9,17,26,36,45,53,58,60, 58.53.45,36,26,17,9,2,-2,-5,-5,-4,-2,-1,-1)/64 |
| Filter 4 | (1,2,3,4,3,2,1)/4 |

Table 4- (continued)

| Filters Used for Prediction Filtering | |
|---|---|
| Prediction Filters | Filter Kernel Function |
| Filter 5 | (1,2,3,4,5,6,7,8,7,6,5,4,3,2,1)/8 |

Table 5-

| Filters Used for Horizontal Prediction Filtering | | |
|---|---|---|
| Prediction Mode | Filter No. | Phase |
| Progressive sequence, luma | Filter 2 | See Table 7 |
| Interlaced sequence, luma | Filter 3 | See Table 8 |
| Progressive sequence, chroma | Filter 4 | See Table 9 |
| Interlaced sequence, chroma | Filter 5 | See Table 10 |

Table 6-

| Filters Used for Vertical Prediction Filtering | | |
|---|---|---|
| Prediction Mode | Filter No. | Phase |
| Progressive sequence, luma | Filter 2 | See Table 11 |
| Interlaced sequence, luma, dy even | Filter I | 0 |
| Interlaced sequence, luma, dy odd | Filter I | 1 |
| Progressive sequence, chroma | Filter 4 | See Table 12 |
| Interlaced sequence, chroma, dy//2 even | Filter 1 | 0 |
| Interlaced sequence, chroma, dy//2 odd | Filter 1 | 1 |

Table 7-

| Phase Selection for Horizontal Luma Prediction Filtering in Progressive Sequences | |
|---|---|
| dx%4 | Phase |
| 0 | 0 |
| -3,1 | 1 |
| -2,2 | 2 |
| -1,3 | 3 |

Table 8-

| Phase Selection for Horizontal Luma Prediction Filtering in Interlaced Sequences | |
|---|---|
| dx%8 | Phase |
| 0 | 0 |
| -7,1 | 1 |
| -6,2 | 2 |
| -5,3 | 3 |
| 4,4 | 4 |

Table 8-　(continued)

| Phase Selection for Horizontal Luma Prediction Filtering in Interlaced Sequences | |
|---|---|
| dx%8 | Phase |
| -3,5 | 5 |
| -2,6 | 6 |
| -1,7 | 7 |

Table 9-

| Phase Selection for Horizontal Chroma Prediction Filtering in Progressive Sequences | |
|---|---|
| dx//2%4 | Phase |
| 0 | 0 |
| -3,1 | 1 |
| -2,2 | 2 |
| -1,3 | 3 |

Table 10-

| Phase Selection for Horizontal Chroma Prediction Filtering in Interlaced Sequences | |
|---|---|
| dx//2%8 | Phase |
| 0 | 0 |
| -7,1 | 1 |
| -6,2 | 2 |
| -5,3 | 3 |
| -4,4 | 4 |
| -3,5 | 5 |
| -2,6 | 6 |
| -1,7 | 7 |

Table 11-

| Phase Selection for Vertical Luma Prediction Filtering in Progressive Sequences | |
|---|---|
| dy%4 | Phase |
| 0 | 0 |
| -3,1 | 1 |
| -2,2 | 2 |
| -1,3 | 3 |

Table 12-

| Phase Selection for Vertical Chroma Prediction Filtering in Progressive Sequences | |
|---|---|
| dy//2%4 | Phase |
| 0 | 0 |

Table 12-   (continued)

| Phase Selection for Vertical Chroma Prediction Filtering in Progressive Sequences | |
| --- | --- |
| dy//2%4 | Phase |
| -3,1 | 1 |
| -2,2 | 2 |
| -1,3 | 3 |

Table 13-

| Size of Blocks Output by PIP MCU | | |
| --- | --- | --- |
| Prediction Mode | Horizontal Size | Vertical Size |
| Progressive sequence. luma | 8 | 8 |
| Progressive sequence. chroma | 4 | 4 |
| Interlaced sequence, luma, field prediction | 4 | 8 |
| Interlaced sequence, luma, frame prediction | 4 | 16 |
| Interlaced sequence, chroma. field prediction | 2 | 4 |
| Interlaced sequence, chroma, frame prediction | 2 | 8 |

Returning again to FIGURE 2, an ongoing video signal comprising the pixels defining each of successive picture fields or frames (as the case may be) is read out from decimated pixel memory 206 and is applied as an input to sample-rate converter 210. This is done in order to derive a display video signal as an output from sample-rate converter 210 which is forwarded as an input to the PIP display. By way of example, assume that the size of the PIP display is to occupy 1/3 of the horizontal dimension and 1/3 of the vertical dimension of the entire HD display size. If the original resolution of the HD bit-stream is 1920x1080 interlaced, then the PIP decoded frames (in which the number of pixels in the horizontal direction has been decimated by a factor of 4:1) are 480x1080 interlaced. Assuming a 1920x1080 interlaced HD display, the displayed PIP frames should be 640x360 interlaced. Therefore, in this example, the decoded frames stored in memory must be scaled by sample-rate converter 210 by a factor of 4/3 in the horizontal direction and 1/3 in the vertical direction.

Sample-rate converter 210 may take the conventional form functionally shown in the FIGURE 3 block diagram. First, block 300 upsamples the ongoing video signal read out from decimated pixel memory 206 by a factor U (e.g., 4 in only the horizontal direction of the aforesaid example). This involves the insertion of 3 zero-valued pixel samples following each horizontal pixel of this video signal being read out. Second, display filtering compnsing a lowpass interpolation filter ($H_i$) 302 employs the values of the readout video signal to compute interpolated non-zero values for each of these zero-valued pixel samples. Third, block 304 downsamples the output of filter $H_i$ by a factor D (e.g., 3 in both the horizontal and vertical directions of the aforesaid example) by decimating 2 out of each group of 3 successive interpolated non-zero values and using only the remaining one of each group in the display video signal output from sample-rate converter 210.

As discussed above in connection with MCU processing means 208, a prediction value of 0 is provided for the macroblocks of all intracoded (1) pictures. However, in the derivation of predictions for the inter-coded macroblocks of non-intracoded (P and B) pictures, a selected one of the 5 lowpass prediction filters set forth in Table 4 is employed. Should sample-rate converter 210 take the conventional form functionally shown in the FIGURE 3 block diagram, this lowpass prediction filtering results in a noticeable pulsing of the displayed PIP pictures, which is undesirable. In this regard, reference is now made to FIGURES 3a, 3b and 3c.

FIGURE 3a is indicative of a group of n+1 consecutive pictures (GOP) comprising an intracoded (I) picture followed by a series of non-intracoded P pictures $P_1$ to $P_n$ which extend up to, but do not include, the next I picture (shown in a dashed-line box). The displayed I picture is the sharpest, since no lowpass prediction filtering thereof has taken place. However, successive lowpass prediction filtering in MCU 208 of each of non-intracoded pictures $P_1$ to $P_n$ of the series results in the display of each of non-intracoded pictures $P_1$ to $P_n$ being more blurred by the loss of higher spatial frequency information than its immediately preceding one of the GOP pictures, thereby causing the undesirable noticeable pulsing of the displayed PIP pictures.

It is apparent that the last picture $P_n$ of the GOP pictures is the most blurred. If each of the preceding pictures

I, $P_1$, ......, $P_{(n-1)}$ of the GOP pictures is individually lowpass filtered by an amount which results in it being blurred by the same amount as the last picture $P_n$ of the GOP pictures, the undesirable noticeable pulsing of the displayed PIP pictures would be avoided. Because of the relatively small size of the displayed PIP pictures, the blurring of the displayed PIP pictures is substantially less noticeable to a viewer than is a noticeable pulsing of the displayed PIP pictures.

Reference is now made to FIGURES 3b and 3c to show the manner by which the individual lowpass filtering of each of the preceding pictures I, $P_1$, ..., $P_{(n-1)}$ of the GOP pictures is achieved. In FIGURES 3b and 3c, $1<k<n$. FIGURES 3b and 3c show the difference in processing (either vertically or horizontally) between 2 consecutively displayed P pictures, pictures $P_k$ and $P_{(k-1)}$. Included in FIGURE 3b is the motion filter ($H_M$) 306 used to predict picture $P_k$ from picture $P_{(k-1)}$ in the MCU, upsampler block 300, and the display filtering of compensation filter ($H_C(k)$) 308 shown in dashed-line box 310 added to $H_i$ filter 302 and downsampler block 304. Included in FIGURE 3c are the upsampler block 300 and the display filtering of compensation filter ($H_C(k-1)$) 312 shown in dashed-line box 314 added to $H_i$ filter 302 and downsampler block 304. The goal of the compensation filtering is to use $H_C(k)$ filter 308 and $H_C(k-1)$ filter 312 to make the processing in the path enclosed in dashed-line box 310 in FIGURE 3b equivalent to the processing in the path enclosed in dashed-line box 314 in FIGURE 3c. This is accomplished as follows: Let $H_{M,U}$ denote the filter $H_M$ upsampled by U, i.e., the filter obtained by inserting U-1 zeros between consecutive samples of the impulse response of filter $H_M$. Then the desired relationship between $H_C(k)$ and $H_C(k-1)$ is given by

$$H_C(k-1) = H_{M,U}H_C(k).$$

The final P picture $P_n$ in the GOP requires no compensation filter since it already exhibits the maximum amount of blurring. Considenng picture $P_{n-1}$ next, the compensation filter $H_C(n-1) = H_{M,U}$ provides the same maximum amount of blurring as in the final P picture $P_n$ in the GOP series. Continuing backwards through the GOP, $H_C(n-2) = H_{M,U} \cdot H_{M,U}$, $H_C(n-3) = H_{M,U} \cdot H_{M,U} \cdot H_{M,U}$, etc. In general, the compensation filter for picture $P_k$ is given by

$$H_C(k) = H_{M,U}^{n-k}$$

where the superscript $n-k$ means that the frequency response $H_{M,U}$ is multiplied by itself $n-k$ times. The compensation filter for the I picture at the beginning of the GOP is obtained by multiplying $H_C(1)$ by $H_{M,U}$. For a B picture, the compensation filter for either of the two reference pictures can be used.

The implemented filter $H_M$ corresponds to one selected phase of the appropriate filter from Table 4 set forth above. The fact that the phase which is used for prediction filtering varies at the macroblock level makes it very difficult to compensate for prediction filtering perfectly. However, it has been found experimentally that phase 0 provides good results in the design of the aforesaid compensation filters.

Further, the required lowpass compensation filtering can be implemented with virtually no added cost relative to the cost of converter 210 if the values of the filter coefficients in the sample-rate converter 210 are programmable. Since degradation in B pictures does not propagate, it is only necessary to consider I and P pictures in designing these compensation filters. More particularly, by convolving the impulse response of the $H_i$ filter with the impulse response of each of the series of compensation filters for each of the GOP pictures shown in FIGURE 3a, the resulting coefficient values can be pre-computed and stored in memory. Then, all that is required for implementation is appropriate hardware and/or software for loading the correct coefficient values before the display of each ordinal one of these GOP pictures.

Since the amount of memory required to store the coefficient values for a filter is very small, the coefficient values for a large number of filters can be pre-computed and stored. However, should the total number n+1 of the GOP pictures shown in FIGURE 3a be so large that there is insufficient storage capacity to store coefficient values for an individual filter corresponding to each one of the GOP pictures, the coefficient values for one or more of the stored filters could be used for more than one of the GOP pictures, thereby, at least, alleviating the aforesaid noticeable pulsing problem. Consequently, filter functions are advantageously adaptively varied based on system characteristics including, (a) motion vector type, (b) group of picture (GOP) structure, (c) a GOP boundary transition, (d) whether an I, B or P frame is being processed, and (e) whether interlace or progressive frame output required. Therefore, the filter functions may be tailored to accommodate PIP picture characteristics such as (i) desired PIP picture size, (ii) whether an interlace or progressive PIP picture is desired, and (iii) the desired PIP picture vertical and horizontal pixel resolution. This adaptive capability allows a decoder to minimize error propagation in PIP picture generation, for example. Specifically, it enables a decoder to minimize decoding error following removal of I frame data pixels and to minimize error caused by filter mismatch across GOP boundaries.

The principles of the present invention are not confined to the preferred example of PIP decoding means 102, described in detail above, wherein (1) the number of DCT coefficients in each of successive 8x8 blocks is limited to the 6 DCT coefficients $DCT_{0,0}$, $DCT_{1,0}$, $DCT_{2,0}$, $DCT_{0,1}$, $DCT_{1,1}$ and $DCT_{0,2}$ shown in FIGURE 1b and (2) the density of the decoded decimated pixels corresponding to each of these successive 8x8 blocks is reduced by a factor of 4:1 to only 16 pixels per progressive or interlaced frame. Generalizing, the number of equations in each progressive-scan set or interlaced-scan set derived in a single step by unitary IDCT, filtering and pixel-decimation processing means 204 is equal to the number of pixels per progressive or interlaced frame and the number of terms per equation is equal to the reduced number of DCT coefficients employed per 8x8 block. However, for the following reasons, this preferred example of PIP decoding means 102, for use with input data derived from a coded HD video signal that has been coded in accordance with the ISO 13818-2 standard, is considered the most practical:

In a first case, were the high-frequency spatial components in the PIP display to be increased by increasing the number of DCT coefficients in each of successive 8x8 blocks to 10 DCT coefficients by adding the 4 DCT coefficients $DCT_{3,0}$, $DCT_{2,,1}$, $DCT_{1,2}$ and $DCT_{0,3}$ to the 6 DCT coefficients shown in FIGURE 1b, the density of the decoded decimated pixels corresponding to each of these successive 8x8 blocks would have to be reduced by a factor smaller than 4:1 (thereby providing a greater number of pixels than 16 per progressive or interlaced frame) in order to achieve horizontal and vertical spatial sample rates that meet the Nyquist criterion. This would result in an increase the amount of computational processing and complexity required of an implemented unitary IDCT, filtering and pixel-decimation processing means 204, thereby diminishing the benefit of the present invention. Further, a viewer of a relatively small PIP display might not be able to resolve these high-frequency spatial components in the PIP display.

In a second case, the high-frequency spatial components in the PIP display may be decreased by decreasing the number of DCT coefficients in each of successive 8x8 blocks from the 6 DCT coefficients shown in FIGURE 1b to only the 3 DCT coefficients $DCT_{0,0}$, $DCT_{1,0}$ and $DCT_{0,1}$. This facilitates a further decrease in the amount of computational processing and in the required hardware complexity. Specifically, it simplifies the required unitary IDCT, filtering and pixel-decimation processing means 204, at the expense of not being able to effectively further reduce the pixel density of each successive 8x8 block of a progressive or interlaced frame beyond a single pixel for that block (i.e., each single block pixel has a value equal to the DC value of that block).

Although the present invention has been specifically described above in connection with the decoding of a coded HD video signal that has been coded in accordance with the MPEG ISO 13818-2 standard for use in producing in real time a decoded video signal for use by a PIP display, the scope of the present invention is not limited thereto. In particular, the single step process performed by unitary IDCT, filtering and pixel-decimation processing means 204 is applicable to any type of decoder apparatus or method for decoding a coded HD video signal for deriving a decoded video signal which reads on any of the following claims, regardless of whether or not the coded HD video signal has been coded in accordance with the MPEG ISO 13818-2 standard or is or is not produced in real time. Further, the decoded video signal may be for use with a standard-definition display and/or a standard-definition recorded video signal which, when played back, results in a standard-definition display, rather than for use with a PIP display.

## Claims

1. In a system for decoding compressed image data in the form of pixel blocks representing an image of a first resolution to provide an image of a reduced second resolution, a method characterized by the steps of:

   decompressing a pixel block of said first resolution image by,
   selecting a sub-set of frequency domain coefficients in said compressed pixel block data, and
   processing elements of said sub-set of coefficients to provide pixel data representing pixels comprising a spatially distributed sub-set of pixels in said pixel block in said image of said first resolution and excluding other pixels of said pixel block; and
   formatting said pixel data representing pixels comprising said spatially distributed pixels to provide said image of said reduced second resolution.

2. A method according to claim 1 characterized in that said processing step comprises,
   forming weighted linear combinations of elements of said sub-set of coefficients.

3. A method according to claim 2 characterized in that said processing step includes the steps of,

   selecting said spatially distributed sub-set of pixels and
   for said selected sub-set of pixels selecting at least one of, (a) a set of weighting coefficients and (b) a sub-set of frequency domain coefficients.

4. A method according to claim 2 characterized in that said processing step comprises,
   forming predetermined weighted linear combinations of elements of said sub-set of coefficients to provide pixel data representing pixels comprising a non-downsampled spatially distributed sub-set of pixels.

5. A method according to claim 1 further characterized by the step of,
    selecting different spatially distributed sub-sets of pixels for interlace and progressive image output.

6. A method according to claim 1 characterized in that said formatting step comprises,
    upsampling said pixel data representing pixels comprising a spatially distributed sub-set of pixels to provide said image of said reduced second resolution.

7. Apparatus implementing the method of claim 1 characterized in that said processing step is implemented with 'power of 2 logic'.

8. A method according to claim 1 characterized in that said processing step includes the step of,
    selecting said spatially distributed sub-set of pixels based on desired PIP picture characteristic.

9. A method according to claim 7 characterized in that said PIP picture characteristic comprises at least one of (a) PIP picture size, (b) whether said PIP picture is interlace or progressive, and (c) PIP picture vertical and horizontal pixel resolution.

10. A method according to claim 1 characterized in that said formatting step includes the step of,
    adaptively filtering pixel data representing pixels comprising a spatially distributed sub-set of pixels using a filter function selected based on at least one of, (a) motion vector type, (b) group of picture (GOP) structure, (c) a GOP boundary transition, (d) whether I, B or P frame, and (e) whether interlace or progressive frame reduced second resolution output required.

11. A method according to claim 1 characterized in that said formatting step includes the step of,
    adaptively filtering pixel data representing pixels comprising a selected spatially distributed sub-set of pixels using a filter function selected from at least one of, (a) a vertical pixel data filter, (b) a horizontal pixel data filter, (c) a chrominance data filter, and (d) luminance data filter.

PIP
DECODING
MEANS

TO
PIP
DISPLAY

100

HD MPEG DATA
BIT-STREAM

VARIABLE
LENGTH
DETECTOR

102

104

HD
DECODING
MEANS

TO
HD
DISPLAY

FIGURE 1

102

FROM
VLD 100

RLD

IQ

200

202

UNITARY
IDCT,
FILTERING AND
PIXEL-DECIMATION
PROCESSING MEANS

204

+

205

206

DECIMATED-
PIXEL
MEMORY

SAMPLE-
RATE
CONVERTER

TO
PIP
DISPLAY

210

MCU
PROCESSING
MEANS

208

FIGURE 2

|   | 0 | 1 | 2 | 3 | 4 | 5 | 6 | 7 |
|---|---|---|---|---|---|---|---|---|
| 0 | $DCT_{0,0}$ | $DCT_{1,0}$ | $DCT_{2,0}$ | $DCT_{3,0}$ | $DCT_{4,0}$ | $DCT_{5,0}$ | $DCT_{6,0}$ | $DCT_{7,0}$ |
| 1 | $DCT_{0,1}$ | $DCT_{1,1}$ | $DCT_{2,1}$ | $DCT_{3,1}$ | $DCT_{4,1}$ | $DCT_{5,1}$ | $DCT_{6,1}$ | $DCT_{7,1}$ |
| 2 | $DCT_{0,2}$ | $DCT_{1,2}$ | $DCT_{2,2}$ | $DCT_{3,2}$ | $DCT_{4,2}$ | $DCT_{5,2}$ | $DCT_{6,2}$ | $DCT_{7,2}$ |
| 3 | $DCT_{0,3}$ | $DCT_{1,3}$ | $DCT_{2,3}$ | $DCT_{3,3}$ | $DCT_{4,3}$ | $DCT_{5,3}$ | $DCT_{6,3}$ | $DCT_{7,3}$ |
| 4 | $DCT_{0,4}$ | $DCT_{1,4}$ | $DCT_{2,4}$ | $DCT_{3,4}$ | $DCT_{4,4}$ | $DCT_{5,4}$ | $DCT_{6,4}$ | $DCT_{7,4}$ |
| 5 | $DCT_{0,5}$ | $DCT_{1,5}$ | $DCT_{2,5}$ | $DCT_{3,5}$ | $DCT_{4,5}$ | $DCT_{5,5}$ | $DCT_{6,5}$ | $DCT_{7,5}$ |
| 6 | $DCT_{0,6}$ | $DCT_{1,6}$ | $DCT_{2,6}$ | $DCT_{3,6}$ | $DCT_{4,6}$ | $DCT_{5,6}$ | $DCT_{6,6}$ | $DCT_{7,6}$ |
| 7 | $DCT_{0,7}$ | $DCT_{1,7}$ | $DCT_{2,7}$ | $DCT_{3,7}$ | $DCT_{4,7}$ | $DCT_{5,7}$ | $DCT_{6,7}$ | $DCT_{7,7}$ |

FIGURE 1a

|   | 0 | 1 | 2 | 3 | 4 | 5 | 6 | 7 |
|---|---|---|---|---|---|---|---|---|
| 0 | $DCT_{0,0}$ | $DCT_{1,0}$ | $DCT_{2,0}$ | | | | | |
| 1 | $DCT_{0,1}$ | $DCT_{1,1}$ | | | | | | |
| 2 | $DCT_{0,2}$ | | | | | | | |
| 3 | | | | | | | | |
| 4 | | | | | | | | |
| 5 | | | | | | | | |
| 6 | | | | | | | | |
| 7 | | | | | | | | |

FIGURE 1b

210

FROM 206 → [↑ U] (300) → [INTERPOLATION FILTER (H$_I$)] (302) → [↓ D] (304) → TO PIP DISPLAY

FIGURE 3

┌─────────────── GOP ───────────────┐

| I | P$_1$ | P$_2$ | P$_3$ | P$_{(n-2)}$ | P$_{(n-1)}$ | P$_n$ | I |

FIGURE 3a

310

FROM P$_{(k-1)}$ → [MOTION FILTER (H$_M$)] (306) → P$_k$ → [↑ U] (300) → [COMPENSATION FILTER (H$_C$(k))] (308) → [H$_I$] (302) → [↓ D] (304) → PIP DISPLAY OF IMAGE P$_k$

FIGURE 3b

314

FROM P$_{(k-1)}$ → [↑ U] (300) → [COMPENSATION FILTER (H$_C$(k-1))] (312) → [H$_I$] (302) → [↓ D] (304) → PIP DISPLAY OF IMAGE P$_{(k-1)}$

FIGURE 3c

EP 0 973 337 A2